# EUROPÄISCHE PATENTANMELDUNG

(11) **EP 1 128 135 A2**
(43) Veröffentlichungstag der Anmeldung: **29.08.2001**
(21) Anmeldenummer: 01104651.3
(22) Anmeldetag: 24.02.2001
(51) Int. Cl.: F24J 2/04

(54) **Hohler Dachziegel zur Warmwasserbereitung**

(30) Priorität: 24.02.2000 DE 10008622
(71) Anmelder: Schaller, Joachim, Prof. Dr.-Ing. habil., 01169 Dresden (DE)
(72) Erfinder: Ryssel, Steffen, Dipl.-Ing. (FH), 01728 Possendorf (DE); Schaller, Joachim, Prof. Dr.-Ing. habil., 01169 Dresden (DE); Weidhase, Lutz, 01277 Dresden (DE)
(74) Vertreter: Weissfloh, Ingo

(57) **Zusammenfassung**

Der Dachziegel (1) besitzt auf seiner Vorderseite im oberen Bereich eine Zuflussöffnung (2) und auf seiner Rückseite im unteren Bereich eine Abflussöffnung (3). Die Zuflussöffnung (2) und die Abflussöffnung (3) sind kreisrund und besitzen einen Absatz (5), der einen größeren Durchmesser als die Öffnungen (2) und (3) hat. Die Zuflussöffnung (2) und die Abflussöffnung (3) der unterschiedlichen Dachziegel (1) korrespondieren miteinander. Als Verbindungselement wird ein Rohrstutzen mit an seinen beiden Enden angebrachten Dichtungslippen verwendet. Dieser Rohrstutzen ist in seiner Länge den aufeinanderliegenden Dachziegeln und den Öffnungen (2) und (3) mit dem Absatz (5) angepasst. Die etwas kleinere Öffnung (2) und (3) gegenüber dem Absatz (5) bildet einen Anschlag für den Rohrstutzen. Innerhalb des hohlen Dachziegels (1) sind leicht geneigte Trennwände (4), hin zur Fließrichtung des Wärmeträgermediums, angeordnet. Diese Trennwände (4) reichen abwechselnd von der rechten Seite und dann von der linken Seite bis fast zur Gegenseite. Die Trennwände (4) bilden somit einen mäanderförmig verlaufenden Hohlraum im Dachziegel (1).

## Beschreibung

Es ist bekannt, Dachziegel durch eine besondere Gestaltung zur Warmwasserbereitung zu nutzen. In der DE 2932872 wird bereits eine Dachpfanne beschrieben, die mit einem flüssigkeitsdurchströmten Rohrleitungssystem versehen ist. Die DE G 8708492 benutzt einen Teil des Dachziegels zur Aufnahme und Halterung einer Rohrleitung für das zu erwärmende Wasser. In der DE 19538112 besteht der Dachziegel aus einem lichtdurchlässigen Oberteil und einem Unterteil herkömmlicher Ziegel. Zwischen dem Ober- und Unterteil befindet sich ein wärmetauschendes und -leitendes Element. Weitere zweiteilige Dachziegel zur Warmwasserbereitung, die aus einer Grundplatte und einer Abdeckplatte bestehen, sind in den Schriften DE 196 15165 und DE 29811021 beschrieben. Wobei in der DE 29811021 als Varianten der Ausführung neben einem unter den Dachziegeln verlegten Schlauchsystem auch noch ein Hohlraumsystem innerhalb der Dachziegel zur Zirkulation von Flüssigkeiten angelegt ist.

Die Kombination Dachziegel mit einem Rohrsystem ist in der Herstellung sehr aufwendig. Verschiedene Ausführungsarten weichen von der sonst üblichen Form und Farbe der Dacheindeckung ab. Es entsteht damit kein einheitliches Bild der Dacheindeckung. Die getrennte Rohrführung unter dem Dachziegel ergibt einen geringeren Wirkungsgrad gegenüber der direkten Rohrführung im Dachziegeln. Dieser Nachteil kann nur durch zusätzliche Isolationsmaßnahmen unterhalb des Dachziegels und dem dort liegenden Rohrsystem aufgehoben werden.

Der im Anspruch 1 angegebenen Erfindung liegt das Problem zugrunde, die Wirkung einer einheitlichen Dacheindeckung des gesamten Daches bei der Nutzung einzelner Dachziegel zur Warmwassererzeugung zu erreichen, eine einfache Montage bzw. Dacheindeckung bei einer geringen Anzahl zusätzlicher Elemente insbesondere der Verbindungstechnik zu ermöglichen und die Herstellungskosten gegenüber bereits bekannten Ausführungsformen von Dachziegeln für die Warmwassererzeugung zu senken.

Die mit der Erfindung erzielten Vorteile bestehen insbesondere darin, dass neben den bereits in der Problemstellung genannten Vorteilen eine sichere Verbindungstechnik bei einem vertretbaren Kostenaufwand erreicht wird. Die Montage der einzelnen Dachziegel untereinander erfordern keine wesentlichen Handfertigkeiten. Die Demontage einzelner defekter Dachziegel und der Ersatz durch neue Dachziegel ist gegeben.

Vorteilhafte Ausgestaltungen der Erfindung sind in den Ansprüchen 2 bis 8 beschrieben. Nach der Weiterbildung gemäß Anspruch 2 besteht der Dachziegel nicht wie sonst üblich aus einem Ober- und Unterteil. Er ist einteilig ausgebildet. Nach Anspruch 3 ist durch eine entsprechende Anordnung von Trennwänden im Inneren des hohlen Dachziegels ein mäanderförmiger Hohlraum gegeben, der einer Verbesserung der Wärmeaufnahme des Wärmeträgermediums dient. Die Weiterbildung nach Anspruch 4 beschreibt eine leichte Neigung der Trennwände in Fließrichtung des Wärmeträgermediums. Diese Weiterbildung dient hauptsächlich einer restlosen Leerung der Anlage. Die Weiterbildungen nach den Ansprüchen 5 bis 8 beschreiben die unterschiedlichsten Varianten der Verbindungstechnik zwischen den einzelnen Dachziegeln, wobei Anspruch 6 nur eine Umkehrung des Anspruches 5 ist.

Ein Ausführungsbeispiel der Erfindung ist in der Zeichnung dargestellt und wird im folgenden näher beschrieben.

Es zeigen
Fig. 1 eine perspektivische Draufsicht auf einen Dachziegel mit einer Zuflussöffnung,
Fig. 2 eine perspektivische Ansicht der Rückseite des Dachziegels mit einer Abflussöffnung, Fig. 3 die Draufsicht auf eine Dachziegel mit der angedachten Schnittlinie AA
Fig. 4 der Schnitt durch einen Dachziegel in der Ebene AA
Fig. 5 die Detailansicht einer Zuflussöffnung mit einem Absatz und einem Dichtungsring

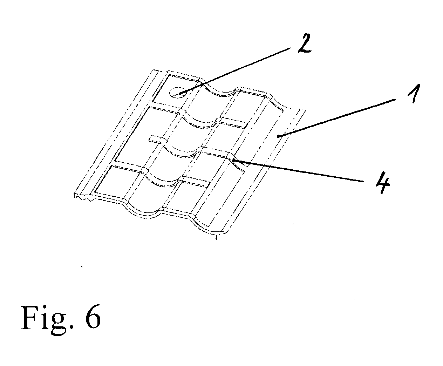

Fig. 6 die Anordnung der Trennwände innerhalb des Dachziegels.

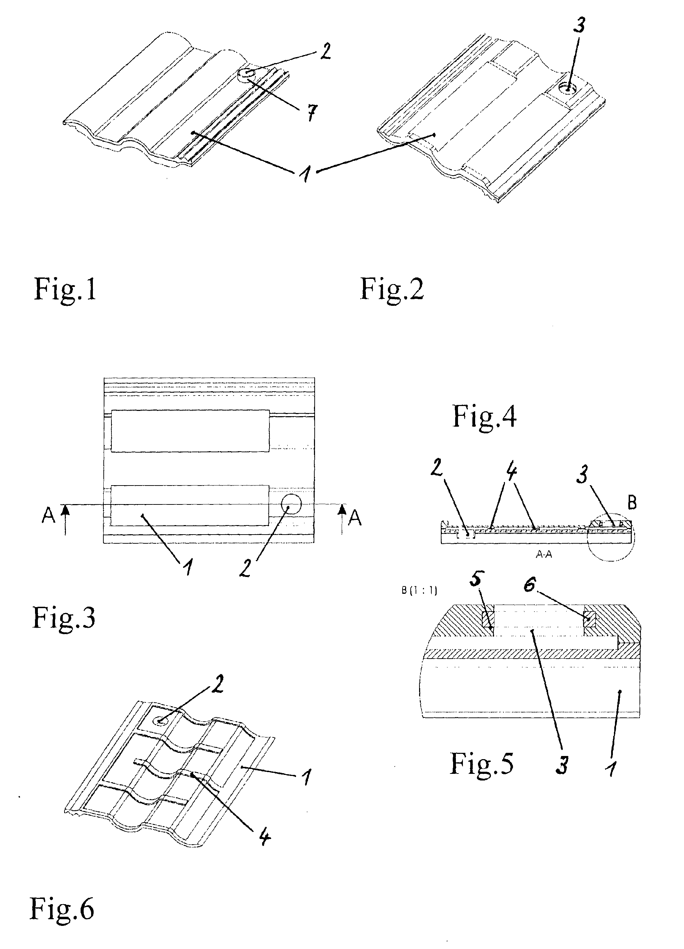

Der Dachziegel 1 im Ausführungsbeispiel ist einteilig ausgebildet. Auf seiner Vorderseite besitzt er im oberen Bereich eine Zuflussöffnung 2 und auf seiner Rückseite im unteren Bereich eine Abflussöffnung 3. Die Zuflussöffnung 2 und die Abflussöffnung 3 sind kreisrund und besitzen einen Absatz 5, der einen größeren Durchmesser als die Öffnungen 2 und 3 hat. In der Zeichnung Fig. 5 ist dieser Absatz 5 nach dem Dichtungsring 6 wieder zurückgezogen auf den gleichen Durchmesser der Zufluss- bzw. Abflussöffnung 2, 3. Die Zuflussöffnung 2 und die Abflussöffnung 3 der unterschiedlichen Dachziegel 1 korrespondieren miteinander. Als Verbindungselement wird ein Rohrstutzen mit an seinen beiden Enden angebrachten Dichtungslippen verwendet. Dieser Rohrstutzen ist in seiner Länge den aufeinanderliegenden Dachziegeln und den Öffnungen 2 und 3 mit dem Absatz 5 angepasst. Die etwas kleinere Öffnung 2 und 3 gegenüber dem Absatz 5 bildet einen Anschlag für den Rohrstutzen. In diesem Ausführungsbeispiel übernimmt also der Rohrstutzen die Aufgabe des Bundes 7. Innerhalb des hohlen Dachziegels 1 sind leicht geneigte Trennwände 4, hin zur Fließrichtung des Wärmeträgermediums, angeordnet. Diese Trennwände 4 reichen abwechselnd von der rechten Seite und dann von der linken Seite bis fast zur Gegenseite. Die Trennwände 4 bilden somit einen mäanderförmig verlaufenden Hohlraum im Dachziegel 1.

### Zusammenstellung der Bezugszeichen

- 1 -: Dachziegel
- 2 -: Zuflussöffnung
- 3 -: Abflussöffnung
- 4 -: Trennwände
- 5 -: Absatz
- 6 -: Dichtungsring
- 7 -: Bund

## Patentansprüche

1. Hohler Dachziegel zur Warmwasserbereitung,
dadurch gekennzeichnet,
dass der Dachziegel (1) auf seiner Vorderseite eine oder mehrere Zuflussöffnungen (2) und auf seiner Rückseite eine oder mehrere Abflussöffnungen (3) besitzt, wobei die Zuflussöffnung (2) oder -öffnungen (2) im oberen Teil der Dachziegels (1) und die Abflussöffnung (3) oder -öffnungen (3) im unteren Teil des Ziegels angeordnet sind und miteinander zur jeweiligen Öffnung (2), (3) des Nachbardachziegels (1) korrespondieren.

2. Dachziegel nach Anspruch 1,
dadurch gekennzeichnet,
dass der Dachziegel (1) einteilig ausgebildet ist.

3. Dachziegel nach Anspruch 1 und 2,
dadurch gekennzeichnet,
dass im Inneren des hohlen Dachziegels (1) abwechselnd von der rechten Seite und dann von der linken Seite Trennwände (4) angeordnet sind, die kurz vor der Gegenseite enden und somit einen mäanderförmigen Hohlraum im Dachziegel (1) ergeben.

4. Dachziegel nach Anspruch 1 bis 3,
dadurch gekennzeichnet,
dass die Trennwände (4) eine leichte Neigung in Fließrichtung des Wärmeträgermediums besitzt.

5. Dachziegel nach Anspruch 1 bis 4,
dadurch gekennzeichnet,
dass die Zuflussöffnung (2) kreisrund und mit einem Absatz (5) versehen ist, der einen größeren Durchmesser als die Zuflussöffnung (2) besitzt und daß in diesem Absatz (5) ein Dichtungsring (6) angeordnet ist und dass die Ablussöffnung (3) aus einem kreisrunden Bund (7) besteht, der mit seinen Maßen den Maßen der Zuflussöffnung (2) so angepaßt ist, daß ein Zusammenstecken möglich ist.

6. Dachziegel nach Anspruch 5,
dadurch gekennzeichnet,
dass die Zuflussöffnung (2) einen Bund (7) und die Abflussöffnung (3) einen Absatz (5) mit einem Dichtungsring (6) besitzt.

7. Dachziegel nach Anspruch 1 bis 4,
dadurch gekennzeichnet,
dass die Zuflussöffnung (2) und die Abflussöffnung (3) jeweils kreisrund und mit einem Absatz (5) versehen ist, der einen größeren Durchmesser als die Zuflussöffnung (2) oder Abflussöffnung (3) besitzt und ein externer Rohrstutzen mit oder ohne Dichtungslippen in den Abmaßen der Öffnungen (2) und (3) die Verbindung der einzelnen Dachziegel übernimmt.

8. Dachziegel nach Anspruch 5 und 6,
dadurch gekennzeichnet,
dass der Bund (7) in seiner äußeren Form einen Kegelstumpf bildet und der Absatz (5) in seiner inneren Form diesem Kegelstumpf angepasst ist.
